# EUROPÄISCHE PATENTSCHRIFT

(11) **EP 0 982 351 B1**
(45) Veröffentlichungstag und Bekanntmachung des Hinweises auf die Patenterteilung: **20.12.2000**
(21) Anmeldenummer: 99114290.2
(22) Anmeldetag: 29.07.1999
(51) Int. Cl.: C08J 3/03, C08F 2/16, C08G 63/91, C04B 24/16

(54) **Schutzkolloidstabilisierte Polymer-Zusammensetzungen**
Protective colloid stabilized polymer compositions
Compositions polymères stabilisées au moyen de colloides protecteurs

(30) Priorität: 20.08.1998 DE 19837856
(43) Veröffentlichungstag der Anmeldung: 01.03.2000
(73) Patentinhaber: Wacker-Chemie GmbH, 81737 München (DE)
(72) Erfinder: Weitzel, Hans-Peter, Dr., 84571 Reischach (DE); Tschirner, Peter, Dr., 84547 Emmerting (DE); Figge, Reiner, Dr., 84539 Ampfing (DE); Bauer, Doris, Dr., 84453 Mühldorf (DE); Ball, Peter, Dr., 84547 Emmerting (DE)
(74) Vertreter: Schuderer, Michael, Dr.

(56) Entgegenhaltungen:
- EP-A- 0 803 554
- DE-A- 19 608 911

## Beschreibung

Die Erfindung betrifft schutzkolloidstabilisierte Polymer-Zusammensetzungen in Form deren wässrigen Polymerdispersionen oder in Wasser redispergierbaren Polymerpulver, welche ein filmbildendes Basispolymer und ein Schutzkolloid enthalten, sowie deren Herstellung und deren Verwendung.

Schutzkolloidstabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate eingesetzt. Als Schutzkolloide werden in der Regel Polyvinylalkohole (PVAl) eingesetzt. Damit diese Schutzkolloide ihre Wirkung entfalten können, benötigen sie ein gewisses Molekulargewicht; üblicherweise werden Polyvinylalkohole mit einer Viskosität nach Höppler von mindestens 4 mPas oder höher (4 %-ige wässrige Lösung) eingesetzt. Polyvinylalkohole niederer Viskosität bzw. Molekulargewicht führen nicht zu rieselfähigen, klumpenfreien und gut redispergierbaren Pulvern.

Nachteilig an diesen Schutzkolloiden ist, daß sie zu einer relativ hohen Dispersionsviskosität führen und bei der Herstellung der Pulver nur mit geringen Festgehalten im Verdüsungsansatz gearbeitet werden kann, wodurch die Wirtschaftlichkeit des Verfahrens erheblich beeinträchtigt wird. Die zugänglichen Verdüsungsfestgehalte betragen bei der Herstellung von PVAl-haltigen Pulvern in der Regel bis zu 45 Gew%, in Ausnahmefällen bis zu 48 Gew%. Verdüsungsfestgehalte über 50% sind wegen der mit dem Festgehalt ansteigenden Viskosität nicht mehr verarbeitbar (versprühbar). In der Regel wird der Feststoffgehalt der zu versprühenden Dispersion so gewählt, daß eine Viskosität von < 500 mPas (Brookfield-Viskosität bei 20 Umdrehungen und 23°C), bevorzugt < 250 mPas, erhalten wird. Außerdem ist die hohe Viskosität der mit PVAl-haltigen Pulvern erhältlichen Redispersion auch in vielen Anwendungen von Nachteil.

Durch ausschließliche Stabilisierung mit niedermolekularen Verbindungen (z.B. Emulgatoren, Zuckerderivaten, niedermolekulare Dextrine) werden zwar vielfach niederviskose Dispersionen und Redispersionen erhalten, die Stabilisierung ist in aller Regel jedoch nicht ausreichend um zu schutzkolloidstabilisierten Pulvern vergleichbar gut redispergierbare und blockstabile Pulver zu erhalten. Außerdem ist der Einsatz von emulgatorstabilisierten Pulvern in der Anwendung mit hydraulischen Bindemitteln kritisch, da vielfach keine ausreichende Zementstabilität vorliegt.

Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität); denn es ist einem Anwender nicht zuzumuten, daß er innerhalb einer kurzen Zeitspanne eine neue Mischung anrühren muß. In der Beton- und Mörtelindustrie spielen darüberhinaus die mechanischen Eigenschaften, wie die Druckfestigkeit, die Porosität und damit der Luftporengehalt eine wesentliche Rolle. Sind zu viele Luftporen vorhanden, so sinkt die Druckfestigkeit stark ab, sind zu wenig oder keine Luftporen im Mörtel oder Beton vorhanden, ist der Baustoff nicht genügend frosttaustabil. Die mit dem Dispersionspulver vergüteten hydraulisch abbindenden Systeme sollen zudem noch bessere Haftung gegenüber den unvergüteten Systemen erbringen.

Aus der EP-A 723975 (CA-A 2168157) sind in Wasser redispergierbare Dispersionspulver auf der Basis von Vinylacetat-Ethylen-Copolymerisaten, die durch Polyvinylalkohol stabilisiert sind, bekannt. Die dort beschriebenen Dispersionen müssen vor der Sprühtrocknung auf einen Festgehalt von 40 Gew% verdünnt werden.

Aus der EP-A 770640 (AU-A 9670406) sind in Wasser redispergierbare Dispersionspulver mit beliebiger Harzbasis bekannt. Als Schutzkolloide werden Polyelektrolyte eingesetzt, die eine zum Harz entgegengesetzte Ladung aufweisen. Vor der Sprühtrocknung wird die Dispersion auf 35 Gew% Feststoffgehalt verdünnt.

Aus der EP-A 725092 (CA-A 2168826) sind in Wasser redispergierbare Dispersionspulver auf der Basis von Styrol-AcrylatCopolymerisaten bekannt. Die Stabilisierung erfolgt nur durch Emulgatoren und sulfonsäurehaltige Hilfsmonomere, es wird kein zusätzliches Schutzkolloid eingesetzt. Vor der Sprühtrocknung wird die Dispersion auf 30 Gew% Feststoffgehalt verdünnt.

Aus der EP-A 723975 (CA-A 2168157) sind in Wasser redispergierbare, vernetzbare Dispersionspulver auf der Basis von Styrol-Acrylat-Copolymerisaten bekannt. Die Stabilisierung erfolgt durch Polyvinylalkohol. Die Dispersionen besitzen hohe Viskositäten von bis zu 8000 mPas bei 55 Gew% Festgehalt und müssen vor der Sprühtrockung auf einen Feststoffgehalt unter 50 Gew% verdünnt werden.

Die EP-A 629650 (US-A 5462978) beschreibt die Verwendung von Copolymerisaten von ethylenisch ungesättigten Monomeren und sulfonatfunktionellen Monomeren, insbesondere Acrylamidomethylpropansulfonsäure, als Sprühhilfsmittel bei der Sprühtrocknung von wässrigen Polymerdispersionen.

Der Erfindung lag somit die Aufgabe zugrunde, redispergierbäre Pulver sowie Dispersionen zur Herstellung der Pulver zur Verfügung zu stellen, welche die genannten Nachteile des Standes der Technik vermeiden. Das heißt eine relativ niederviskose Dispersion, gegebenenfalls auch mit einem Festgehalt von > 50 Gew%, zur Verfügung zu stellen mit der Pulver zugänglich werden, die eine niederviskose Redispersion liefern und gleichzeitig gut redispergierbar, rieselfähig und blockfest sind, wobei die Produkte insbesondere bei der Anwendung mit hydraulischen Bindemitteln über eine voll befriedigende Viskositäts- bzw. Zementstabilität verfügen und das Zementabbinden nicht behindern sollten.

Gegenstand der Erfindung sind schutzkolloidstabilisierte Polymer-Zusammensetzungen in Form deren wässrigen Polymerdispersionen oder in Wasser redispergierbaren Polymerpulver, welche mindestens ein filmbildendes Basispolymer und ein Schutzkolloid enthalten, dadurch gekennzeichnet, daß das Schutzkolloid ein sulfoniertes Kondensationsprodukt aus ungesättigten Di- oder Polycarbonsäuren und mindestens einer Verbindung aus der Gruppe umfassend Diole, Polyole, Diamine und Polyamine ist.

Die erfindungsgemäßen Schutzkolloide werden aus ungesättigten Polyestern oder Polyamiden mittels Addition von Hydrogensulfit an die Doppelbindungen hergestellt. Die Synthese derartiger Polykondensate ist dem Fachmann bekannt und in der Literatur ausführlich,beschrieben (H.G. Elias, Makromoleküle, Hüthig & Wepf, Basel , 4. Auflage, 1981 , S 784 ff). Dazu wird in der Regel mit einem 1 bis 20 %-igen Überschuß der Alkohol-, Amin- oder der Carbonsäurekomponente gearbeitet, je nachdem ob ein Alkohol-, Amin- oder Carboxylgruppen terminiertes Produkt erhalten werden soll. Die Gewichtsmittel des Molekulargewichtes (Mw) der noch nicht sulfonierten Ausgangsprodukte liegen zwischen 500 und 1000000, bevorzugt zwischen 1000 und 20000 (Bestimmung mittels SEC gegen Polystyrolstandard).

Die ungesättigten Polyester werden in literaturbekannter Weise durch Veresterung von ethylenisch ungesättigten Di- oder Polycarbonsäuren mit gesättigten Diolen oder Polyolen erhalten. Als Carbonsäurekomponente geeignet sind die ethylenisch ungesättigten, aliphatischen oder aromatischen Di- oder Polycarbonsäuren, oder deren reaktionsfähigen Derivate wie Säureanhydride, mit im allgemeinen 4 bis 10 C-Atomen und 2 bis 4 Carbonsäurefunktionen oder davon abgeleiteten Carbonsäureanhydrid-Gruppen. Üblicherweise werden ungesättigte Dicarbonsäuren eingesetzt. Beispiele hierfür sind Maleinsäure, Maleinsäureanhydrid, Fumarsäure, Itaconsäure, Citraconsäure, Mesaconsäure, Phthalsäure, Phthalsäureanhydrid, Isophthalsäure, Terephthalsäure. Bevorzugt werden Maleinsäure, Maleinsäureanhydrid, Fumarsäure und Itaconsäure. Besonders bevorzugt wird Maleinsäureanhydrid.

Als Diol- oder Polyol-Komponente geeignet sind aliphatische, offenkettige oder cyclische Polyole mit 2 oder mehr, im allgemeinen 2 oder 3 OH-Gruppen, und mit vorzugsweise 2 bis 12 C-Atomen. Bevorzugt werden Diole, beispielsweise 1,2-Ethandiol, 1,2-Propandiol, 1,3-Propandiol, 1,3-Butandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol; Di-, Tri-, Tetra-, Pentaethylenglykole; 1,4-Bishydroxymethylcyclohexan, 1,4-cyclohexandiol, 2,2'-Dimethylpropandiol (Neopentylglykol). Besonders bevorzugt werden 1,2-Ethandiol, 1,2-Propandiol, 1,3-Butandiol, 1,4-Butandiol, 1,4-Cyclohexandiol, 2,2'-Dimethylpropandiol.

Die ungesättigten Polyamide werden in literaturbekannter Weise durch Umsetzung von ethylenisch ungesättigten Di- oder Polycarbonsäuren mit gesättigten Diaminen erhalten. Als Di- oder Polycarbonsäuren kommen die obengenannten zum Einsatz. Für die Polyamidherstellung übliche Diamine sind beispielsweise Hexamethylendiamin, 4,4'-Diaminodicyclohexylmethan, Trimethylhexamethylendiamin.

Die sulfonierten Polyester und Polyamide werden durch Umsetzung der ungesättigten Polyester und Polyamide mit Natriumpyrosulfit erhalten. Zur Sulfonierung wird eine Lösung der Polyester bzw. Polyamide in einem möglichst mit Wasser mischbaren Lösungsmittel, wie Aceton, THF, Isopropanol, DMSO, Chloroform, unter Rückfluß mit einer wässrigen Lösung von Sulfonierungsagens, beispielsweise Alkalidisulfite wie Natriumpyrosulfit, versetzt und mehrere Stunden unter Rückfluß gehalten. Durch die Menge an eingesetztem Sulfonierungsmittel kann der Sulfonierungsgrad des Polyesters eingestellt werden, indem pro Mol an ungesättigter Monomereinheit die entsprechende Molmenge Disulfit eingesetzt wird. Der Sulfonierungsgrad wird in der Regel auf 10 Mol% bis 100 Mol%, vorzugsweise 50 Mol% bis 100 Mol%, bezogen auf die Doppelbindungen im Polyester bzw. Polyamid, eingestellt. Die Mittelwerte des Molekulargewichtes (gewichtsmittleres Molekulargewicht Mw) liegen zwischen 500 und 1000000, bevorzugt zwischen 1000 und 20000.

Am meisten bevorzugte Schutzkolloide sind die sulfonierten Polyester erhältlich durch Polykondensation von einer oder mehreren Verbindungen aus der Gruppe umfassend Maleinsäure, Maleinsäureanhydrid, Fumarsäure oder Itaconsäure als Carbonsäurekomponente mit einer oder mehreren Verbindungen aus der Gruppe umfassend 1,2-Ethandiol, 1,2-Propandiol, 1,3-Butandiol, 1,4-Butandiol, 1,4-Cyclohexandiol oder 2,2'-Dimethylpropandiol als Diolkomponente und anschließender Hydrogensulfit-Addition an die Doppelbindungen. Der Sulfonierungsgrad beträgt vorzugsweise 50 Mol% bis 100 Mol%, und das gewichtsmittlere Molekulargewicht Mw zwischen 1000 und 20000.

Der Schutzkolloidanteil in der wässrigen Polymerdispersion oder in der in Wasser redispergierbaren Polymerpulver-Zusammensetzung beträgt im allgemeinen 3 bis 30 Gew%, vorzugsweise 5 bis 15 Gew%, bezogen auf den Anteil an filmbildendem Basispolymer.

Geeignete Basispolymere sind Polymerisate von einem oder mehreren Monomeren aus der Gruppe der Vinylester von unverzweigten oder verzweigten Carbonsäuren mit 1 bis 12 C-Atomen, der Ester der Acrylsäure und Methacrylsäure mit unverzweigten oder verzweigten Alkoholen mit 1 bis 12 C-Atomen, Vinylaromaten, Vinylhalogenide, Olefine, Diene.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1.3-Butadien und Isopren.

Gegebenenfalls können noch 0.05 bis 10 Gew%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Angaben in Gewichtsprozent addieren sich jeweils auf 100 Gew% auf. Unter filmbildendem Basispolymer ist dabei zu verstehen, daß die Monomerauswahl bzw. die Auswahl der Gewichtsanteile der Comonomere so erfolgt, daß im allgemeinen eine Glasübergangstemperatur Tg von -50°C bis +50°C, vorzugsweise - 30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Als filmbildende Basispolymere werden die nachstehend aufgeführten besonders bevorzugt, gegebenenfalls mit Hilfsmonomeranteil:

Vinylacetat-Polymerisate, Vinylacetat-Ethylen-Copolymere, Vinylester-Ethylen-Vinylchlorid-Copolymere, Vinylester-Acrylsäureester-Copolymerisate, Polymerisate von n-Butylacrylat oder 2-Ethylhexylacrylat, Copolymerisate von Methylmethacrylat mit n-Butylacrylat und/oder 2-Ethylhexylacrylat, Vinylacetat/Vinylchlorid/Ethylen-Copolymerisaten, Vinylchlorid-Ethylen-Copolymere, Vinylchlorid/Acrylat-Copolymere, Styrol-Butadien-Copolymere, Styrol-Acrylsäureester-Copolymere.

Die Herstellung der Schutzkolloid-stabilisierten, wässrigen Polymerdispersionen bzw. in Wasser redispergierbaren Polymerpulver erfolgt durch Polymerisation des Basispolymeren nach dem Emulsions- oder Suspensionspolymerisationsverfahren und gegebenenfalls anschließender Trocknung der wässrigen Dispersion, wobei die sulfonierten Polyester bzw. Polyamide ganz oder teilweise bereits vor oder während der Polymerisation zugegeben werden oder nach der Polymerisation bzw. vor der Trocknung der damit erhältlichen wässrigen Dispersion zugegeben werden oder nach der Trocknung der wässrigen Dispersion dem pulverförmigen Basispolymeren zugegeben werden.

Bei der Herstellung des Basispolymeren nach dem Emulsions- oder Suspensionspolymerisationsverfahren beträgt die Polymerisationstemperatur im allgemeinen 40°C bis 100°C, vorzugsweise 60°C bis 90°C. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Besonders bevorzugt wird die Emulsionspolymerisation, wobei die Initiierung der Polymerisation mit den für die Emulsionspolymerisation gebräuchlichen Initiatoren oder Redox-Initiator-Kombinationen erfolgt. Geeignete organische Initiatoren sind beispielsweise Hydroperoxide wie tert.-Butylhydroperoxid, tert.-Butylperoxopivalat, Cumolhydroperoxid, Isopropylbenzolmonohydroperoxid oder Azoverbindungen wie Azobisisobutyronitril. Geeignete anorganische Initiatoren sind die Natrium-, Kalium- und Ammoniumsalze der Peroxodischwefelsäure. Die genannten Initiatoren werden im allgemeinen in einer Menge von 0.05 bis 3 Gew%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 5.0 Gew%, bezogen auf das Gesamtgewicht der Monomere.

Zur Steuerung des Molekulargewichts können während der Polymerisation regelnde Substanzen eingesetzt werden. Sie werden üblicherweise in Mengen zwischen 0.01 bis 5.0 Gew%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Die Stabilisierung des Polymerisationsansatzes erfolgt mittels Emulgatoren und/oder Schutzkolloiden. Bevorzugt wird die Stabilisierung durch Emulgatoren, um eine niedrige Dispersionsviskosität zu erhalten. Die Gesamtmenge an Emulgator beträgt vorzugsweise 0.1 bis 5 Gew%, insbesonders 0.5 bis 3 Gew%, bezogen auf das Gesamtgewicht der Comonomeren. Geeignete Emulgatoren sind anionische oder nichtionische Emulgatoren, beispielweise:
1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester und deren Alkali- und Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl bzw. Alkylarylrest und 1 bis 50 EO-Einheiten.
4) Alkylpolyglykolether bevorzugt mit 8 bis 40 EO-Einheiten und Alkylresten mit 8 bis 20 C-Atomen.
5) Alkylarylpolyglykolether bevorzugt mit 8 bis 40 EO-Einheiten und 8 bis 20 C-Atomen in den Alkyl-und Arylresten.
6) Ethylenoxid/Propylenoxid (EO/PO)-Blockcopolymere bevorzugt mit 8 bis 40 EO- bzw. PO-Einheiten.

Die sulfonierten Polyester oder sulfonierten Polyamide können gegebenenfalls bereits während der Polymerisation zur Stabilisierung eingesetzt werden.'Die Schutzkolloide werden dabei in Mengen von 3 bis 30 Gew%, bezogen auf das Basispolymerisat, vor oder während der Polymerisation zugegeben. Bevorzugt werden 5 bis 15 Gew% eingesetzt. Gegebenenfalls können die sulfonierten Polyester oder sulfonierten Polyamide auch im Gemisch mit weiteren Schutzkolloiden während der Polymerisation eingesetzt werden. Beispielsweise im Gemisch mit einem oder mehreren Schutzkolloiden aus der Gruppe umfassend teilverseifte Polyvinylacetate, Polyvinylpyrrolidone, Carboxymethyl-, Methyl-, Hydroxyethyl-, Hydroxypropyl-Cellulose, Stärken, Proteine, Poly(meth)acrylsäure, Poly(meth)acrylamid, Polyvinylsulfonsäuren, Melaminformaldehydsulfonate, Naphthalinformaldehydsulfonate, Styrolmaleinsäure- und Vinylethermaleinsäure-Copolymere. Die sulfonierten Polyester bzw. Polyamide werden vorzugsweise ohne Zusatz weiterer Schutzkolloide eingesetzt.

Die Monomere können insgesamt vorgelegt werden, insgesamt zudosiert werden oder in Anteilen vorgelegt werden und der Rest nach der Initiierung der Polymerisation zudosiert werden. Vorzugsweise wird so vorgegangen, daß 10 bis 25 Gew%, bezogen auf das Gesamtgewicht der Monomere vorgelegt wird und der Rest zudosiert wird. Die Dosierungen können separat (räumlich und zeitlich) durchgeführt werden oder die zu dosierenden Komponenten können alle oder teilweise voremulgiert dosiert werden.

Zur Initiierung der Polymerisation kann der thermische Initiator insgesamt vorgelegt werden, oder teilweise vorgelegt und teilweise dosiert werden, oder nur dosiert werden.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem Verfahren erhältlichen wässrigen Dispersionen haben einen Feststoffgehalt von 30 bis 75 Gew%, vorzugsweise von 55 bis 65 Gew%.

Zur Herstellung der in Wasser redispergierbaren Polymerpulver werden die wässrigen Dispersionen, gegebenenfalls nach Zusatz der sulfonierten Polyester bzw. Polyamide getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Die Gesamtmenge an Schutzkolloid vor dem Trocknungsvorgang soll mindestens 3 bis 30 Gew%, bezogen auf den Polymeranteil betragen. Bevorzugt werden 5 bis 20 Gew% bezogen auf den Polymeranteil eingesetzt, wobei es keine Rolle spielt ob das Schutzkolloid bereits während oder nach der Polymerisation zugesetzt wird. Die sulfonierten Polyester oder Polyamide können gegebenenfalls mit beliebigen anderen üblichen Schutzkolloiden kombiniert werden. Geeignete weitere Schutzkolloide/Verdüsungshilfen sind die bereits obengenannten Schutzkolloide. Bevorzugt werden neben den sulfonierten Polyestern bzw. Polyamiden keine weiteren Schutzkolloide als Verdüsungshilfe eingesetzt

Bei der Verdüsung hat sich vielfach ein Gehalt von bis zu 1.5 Gew% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Dispersion wird über den Feststoffgehalt so eingestellt, daß ein Wert von < 500 mPas (Brookfield-Viskosität bei 20 Umdrehungen und 23°C), bevorzugt < 250 mPas, erhalten wird. Der Feststoffgehalt beträgt 50 bis 65 %, bevorzugt 55 bis 65 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die schutzkolloidstabilisierten Polymer-Zusammensetzungen können in Form deren wässrigen Polymerdispersionen oder in Wasser redispergierbaren Polymerpulver in den dafür typischen Anwendungsbereichen eingesetzt werden. Beispielsweise in bauchemischen Produkten in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörtel und Farben. Ferner als Alleinbindemittel für Beschichtungsmittel und Klebemittel oder als Beschichtungs- bzw. Bindemittel für Textilien und Papier.

Die nachfolgenden Beispiele dienen der weiteren Erläuterung der Erfindung:

### Beispiel 1:

### Herstellung von Polyester PE1

Es wurden 233.4 g Diethylenglykol in einem 11-Dreihalskolben mit KPG- Rührer, Innenthermometer und Rückflußkühler vorgelegt und auf 70°C aufgeheizt. Über einen Zeitraum von 15 Minuten wurden 196.1 g Maleinsäureanhydrid (MSA) zugegeben. Durch die exotherme Reaktion erwärmte sich der Ansatz auch ohne zusätzliche Heizung auf 120°C. Sobald die Temperatur wieder auf 80°C gefallen war, wurde über einen Zeitraum von 5 Stunden auf 190°C aufgeheizt. Während dieser Zeit wurde das entstehende Reaktionswasser abdestilliert. Nach den vier Stunden war keine merkliche Destillation mehr erkennbar. Um den.Umsatz in die Höhe zu treiben, wurde für eine weitere Stunde bei 190°C ein Wasserstrahlvakuum angelegt. Das Endprodukt war eine leicht bräunlich gefärbte, bei Raumtemperatur zähe Masse.

### Beispiel 2:

### Herstellung von Polyester PE 2

Vorgehensweise wie bei Beispiel 1, jedoch wurden 247.8 g 1,4-Butandiol und 245.1 g Maleinsäureanhydrid eingesetzt. Das Endprodukt war ein milchig-weißes, wachsartiges Produkt.

### Beispiel 3:

### Herstellung von Polyester PE 3

Vorgehensweise wie bei Beispiel 1, jedoch wurden 396.6 g 1,4-Bishydroxymethylcyclohexan und 245.1 g Maleinsäureanhydrid eingesetzt. Das Endprodukt war ein glasklarer, ungefärbter bei Raumtemperatur spröder Polyester.

### Beispiel 4

### Herstellung von Polyester PE 4

Vorgehensweise wie bei Beispiel 1, jedoch wurden 325 g 1,6-Hexandiol und 245.1 g Maleinsäureanhydrid eingesetzt. Das Endprodukt war ein milchig-weißes, wachsartiges Produkt.

### Beispiel 5

### Herstellung von Polyester PE 5

Vorgehensweise wie bei Beispiel 1, jedoch werden 195.5 g 1,2-Ethandiol und 294.1 g Maleinsäureanhydrid eingesetzt. Das Endprodukt war ein leicht gelblich gefärbtes Produkt.

### Beispiel 6

### Herstellung von Polyester PE 6

Vorgehensweise wie bei Beispiel 1, jedoch wurden 309.9 g 1,4-Cyclohexandiol und 245.1 g Maleinsäureanhydrid eingesetzt. Das Endprodukt war ein glasklares, bei Raumtemperatur sprödes Produkt.

### Beispiel 7

### Herstellung von Polyester PE 7

Vorgehensweise wie bei Beispiel 1, jedoch wurden 267 g 2,2'-Dimethylpropandiol und 245.1 g Maleinsäureanhydrid eingesetzt. Das Endprodukt war ein glasklares Produkt.

### Beispiel 8:

### Herstellung von Polyester PE 8

Vorgehensweise wie bei Beispiel 1, jedoch wurden 991 g 1,4-Butandiol und 1132 g Maleinsäureanhydrid eingesetzt. Das Endprodukt war ein milchig-weißes, wachsartiges Produkt.

### Beispiel 9:

### Herstellung von Polyester PE 9

Vorgehensweise wie bei Beispiel 1, jedoch wurden 1050 g 1,4-Cyclohexandiol und 931.2 g Maleinsäureanhydrid eingesetzt. Das Endprodukt war ein milchig-weißes, wachsartiges Produkt.

Die nicht sulfonierten Polyester sind in der nachfolgenden Tabelle 1 charakterisiert:

**Tabelle 1:**

| | Tg (°C) | M_{W} | %C ber. | %C gef. | %H ber. | %H gef. |
|---|---|---|---|---|---|---|
| PE 1 | - 22 | 6000 | 51.3 | 50.6 | 5.9 | 5.4 |
| PE 2 | - 15* | 3000 | 56.1 | 55.8 | 6.5 | 5.9 |
| PE 3 | + 9 | | 64.0 | 63.9 | 7.6 | 7.5 |
| PE 4 | - 45 | 7000 | 60.3 | 60.5 | 7.6 | 7.5 |
| PE 5 | + 8 | | 50.4 | 49.5 | 4.9 | 4.5 |
| PE 6 | + 48 | 3500 | 60.9 | 60.3 | 6.6 | 6.1 |
| PE 7 | - 5 | 4500 | 58.4 | 57.9 | 7.1 | 6.5 |
| PE 8 | - 14 | 5100 | 56.1 | 55.9 | 6.5 | 6.3 |
| PE 9 | + 48 | 2300 | 60.9 | 61 | 6.6 | 6.8 |

### Herstellung der sulfonierten Polyester:

### (Beispiele 10 bis 27):

Die in Tabelle 2 angegebenen ungesättigten Polyester wurden jeweils in Isopropanol in der Siedehitze gelöst (20 %-ige Lösung), unter leichtem Rückfluß wurde eine Lösung von Na₂S₂O₅ in Wasser über 3 Stunden dosiert und weitere drei Stunden unter Rückfluß gehalten. Anschließend wurde das Isopropanol abdestilliert. Der Sulfonierungsgrad wurde über die eingesetzte Menge Sulfit gesteuert: Wurde pro Mol Doppelbindung ein Mol Sulfit eingesetzt, so wurde ein vollständig sulfoniertes Produkt erhalten. Wurde hingegen pro Mol Doppelbindung nur ein halbes Mol Sulfit eingesetzt, so wurde ein zu 50 Mol% sulfoniertes Produkt erhalten.

Die sulfonierten Polyester sind in der nachfolgenden Tabelle 2 charakterisiert:

**Tabelle 2:**

| Nr. | Polyester | Sulfonierungs-Grad (Mol%) | Festgehalt (%) | pH | K- Wert | Oberflächenspannung (mN/m) | | | |
|---|---|---|---|---|---|---|---|---|---|
| | | | | | | 4 % | 1 % | 0.2 % | 0.1% |
| 10 | PE 1 | 100 | 43.3 | 5.29 | 22 | 64.5 | 68.3 | 70.6 | 72.1 |
| 11 | PE 2 | 100 | 25.3 | 5.52 | 33 | 49.7 | 53.4 | 53.5 | 67.6 |
| 12 | PE 3 | 100 | 30.6 | 6.91 | 9 | 51.9 | 57.5 | 66.8 | 67.0 |
| 13 | PE 4 | 100 | 49.8 | 5.63 | 12 | 57.1 | 60.6 | 66.8 | 68.2 |
| 14 | PE 5 | 100 | 35.6 | 5.35 | 16 | 55.5 | 66.9 | 71.0 | 72.6 |
| 15 | PE 6 | 100 | 47.6 | 5.55 | 14 | 52.3 | 49.4 | 66.5 | 68.5 |
| 16 | PE 7 | 100 | 45.4 | 5.90 | 13 | 46.5 | 52.3 | 57.5 | 61.3 |
| 17 | PE 1 | 50 | 33.7 | 3.28 | 13 | 50.1 | 54.8 | 55.6 | 59.6 |
| 18 | PE 2 | 50 | 25.8 | 5.07 | | 60.1 | 61.6 | 65.2 | 66.5 |
| 19 | PE 3 | 50 | 47.9 | 5.60 | 10 | 53.6 | 55.2 | 57.5 | 57.7 |
| 20 | PE 4 | 50 | 57.6 | 5.11 | 11 | 49.5 | 51.8 | 53.0 | 53.8 |
| 21 | PE 5 | 50 | 25.6 | 3.90 | 14 | 54.7 | 56.5 | 59.6 | 60.7 |
| 22 | PE 6 | 50 | 36.5 | 4.68 | | 55.1 | 56.3 | 58.1 | 59.1 |
| 23 | PE 7 | 50 | 32.5 | 5.35 | | 41.1 | 45.8 | 48.5 | 49.6 |
| 24 | PE 8 | 100 | 22.6 | | 11 | 52.0 | 54.4 | 56.1 | 57.8 |
| 25 | PE 9 | 100 | 20.0 | | 10 | 49.6 | 50.7 | 52.9 | 56.1 |
| 26 | PE 8 | 50 | 20.6 | | 11 | 53.2 | 54.2 | 55.2 | 55.7 |
| 27 | PE 9 | 50 | 20.0 | | 10 | 52.5 | 55.3 | 55.7 | 56.0 |

### Beispiel 28:

### Herstellung eines Pulvers mit dem sulfonierten Polyester aus Beispiel 15.

3500 g einer wässrigen, emulgatorstabilisierten Vinylacetat-Ethylen-Copolymer-Dispersion (VAc/E-Dispersion, hergestellt nach üblichen Methoden der Emulsionspolymerisation) mit Festgehalt 61.1 %, einer Viskosität von 174 mPas, einer Teilchengröße Dw von 450 nm und einer Tg von 0°C wurden mit 540 g einer 47.6 Gew%-igen Lösung des sulfonierten Polyesters aus Beispiel 15, und 300 g Wasser versetzt und gründlich gemischt.

Der Verdüsungsansatz besaß einen Festgehalt von 55.2 % und eine Viskosität von 80 mPas.
Die Dispersion wurde mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet.
Das erhaltene trockene Pulver wurde mit 10 % handelsüblichem Antiblockmittel (Gemisch aus Calcium-Magnesium-Carbonat und Magnesiumhydrosilikat) versetzt.

### Beispiel 29:

### Herstellung eines Pulvers mit dem sulfonierten Polyester aus Beispiel 22.

3500 g einer emulgatorstabilisierten VAc/E-Dispersion mit Festgehalt 61.1 %, einer Viskosität von 174 mPas, einer Teilchengröße Dw von 450 nm und einer Tg von 0°C wurden mit 585 g einer 36.5 Gew%-igen Lösung des sulfonierten Polyesters aus Beispiel 22, und 100 g Wasser versetzt und gründlich gemischt. Der Verdüsungsansatz besaß einen Festgehalt von 56.2 % und eine Viskosität von 160 mPas.
Die Trocknung erfolgte analog Beispiel 28.

### Beispiel 30:

### Herstellung eines Pulvers mit dem sulfonierten Polyester aus Beispiel 25.

3500 g einer emulgatorstabilisierten VAc/E-Dispersion mit Festgehalt 61.1 %, einer Viskosität von 174 mPas, einer Teilchengröße von 450 nm und einer Tg von 0°C wurden mit 1070 g einer 20 Gew%-igen Lösung des sulfonierten Polyesters aus Beispiel 25 versetzt und gründlich gemischt. Der Verdüsungsansatz besaß einen Festgehalt von 51.5 % und eine Viskosität von 60 mPas.
Die Trocknung erfolgte analog Beispiel 28.

### Beispiel 31:

### Herstellung eines Pulvers mit dem sulfonierten Polyester aus Beispiel 15.

3500 g einer emulgatorstabilisierten VAc/E-Dispersion mit Festgehalt 61.1 %, einer Viskosität von 174 mPas, einer Teilchengröße von 450 nm und einer Tg von 0°C wurden mit 450 g einer 47.6 Gew%-igen Lösung des sulfonierten Polyesters aus Beispiel 15 und 300 g Wasser versetzt und gründlich gemischt. Der Verdüsungsansatz besaß einen Festgehalt von 55.3 % und eine Viskosität von 110 mPas.
Die Trocknung erfolgte analog Beispiel 28.

### Beispiel 32:

### Herstellung eines Pulvers mit dem sulfonierten Polyester aus Beispiel 27.

3500 g einer emulgatorstabilisierten VAc/E-Dispersion mit Festgehalt 61.1 %, einer Viskosität von 174 mPas, einer Teilchengröße von 450 nm und einer Tg von 0°C wurden mit 1070 g einer 20 Gew%-igen Lösung des sulfonierten Polyesters aus Beispiel 27 versetzt und gründlich gemischt. Der Verdüsungsansatz besaß einen Festgehalt von 51.5 % und eine Viskosität von 53 mPas.
Die Trocknung erfolgte analog Beispiel 28.

### Beispiel 33:

### Herstellung eines Pulvers mit dem sulfonierten Polyester aus Beispiel 24

3500 g einer emulgatorstabilisierten VAc/E-Dispersion mit Festgehalt 61.1 %, einer Viskosität von 174 mPas, einer Teilchengröße von 450 nm und einer Tg von 0°C wurden mit 950 g einer 22.6 Gew%-igen Lösung des sulfonierten Polyesters aus Beispiel 24 versetzt und gründlich gemischt. Der Verdüsungsansatz besaß einen Festgehalt von 52,9 % und eine Viskosität von 48 mPas.
Die Trocknung erfolgte analog Beispiel 28.

### Beispiel 34:

### Herstellung eines Pulvers mit dem sulfonierten Polyester aus Beispiel 26.

3500 g einer emulgatorstabilisierten VAc/E-Dispersion mit Festgehalt 61.1 %, einer Viskosität von 174 mPas, einer Teilchengröße von 450 nm und einer Tg von 0°C wurden mit 1040 g einer 20.6 Gew%-igen Lösung des sulfonierten Polyesters aus Beispiel 26 versetzt und gründlich gemischt. Der Verdüsungsansatz besaß einen Festgehalt von 51.8 % und eine Viskosität von 42 mPas.
Die Trocknung erfolgte analog Beispiel 28.

### Vergleichsbeispiel 1:

### Herstellung eines polyvinylalkoholhaltigen Pulvers.

20000 g einer emulgatorstabilisierten VAc/E-Dispersion mit Festgehalt 50.2 %, einer Viskosität von 53 mPas, einer Teilchengröße von 1100 nm und einer Tg von -1°C wurden mit 4760 g einer 21.1 Gew%-igen Lösung eines Polyvinylalkohols mit einer Höpplerviskosität von 4 mPas und einem Verseifungsgrad von 88 Mol% und 650 g Wasser versetzt und gründlich gemischt. Der Verdüsungsansatz besaß einen Festgehalt von 43.4 % und eine Viskosität von 124 mPas.
Die Trocknung erfolgte analog Beispiel 28.

### Vergleichsbeispiel 2:

### Herstellung eines stärkehaltigen Pulvers.

3500 g einer emulgatorstabilisierten VAc/E-Dispersion mit Festgehalt 61.1 %, einer Viskosität von 174 mPas, einer Teilchengröße von 450 nm und einer Tg von 1°C wurden mit 683 g einer 31.3 Gew%-igen Lösung einer Stärke mit einem Molekulargewicht von 4500 und 300 g Wasser versetzt und gründlich gemischt. Der Verdüsungsansatz besaß einen Festgehalt von 52.3% und eine Viskosität von 53 mPas.
Die Trocknung erfolgte analog Beispiel 28.

### Redispergierverhalten der Polymerfilme:

Aus den Dispersionen der genannten Beispielen (vor Sprühtrocknung) wurden auf Glasplatten 0.2 mm dicke Filme hergestellt und diese 15 Minuten bei 105°C getrocknet. Zur Überprüfung der Filmredispergierbarkeit wurde bei Raumtemperatur mit einer Pipette jeweils ein Wassertropfen auf eine homogene Stelle des zu prüfenden Filmes aufgebracht, und nach 60 Sekunden Einwirkzeit der Wassertropfen mit der Fingerkuppe so lange an der gleichen Stelle verrieben, bis die Glasplatte an dieser Stelle filmfrei war, der Film in Filmstücke zerfiel oder vollständig erhalten blieb.
Die Redispergierbarkeit der Polymerfilme wurde mit folgendem Bewertungsschema beurteilt:
Note 1: Film läßt sich durch leichtes Reiben sofort redispergieren oder redispergiert bereits selbständig;
Note 2: Film läßt sich durch Reiben redispergieren, wenig redispergierbare Filmstücke möglich;
Note 3: Film läßt sich nur durch kräftiges Reiben unter Bildung von Filmstücken redispergieren;
Note 4: Film läßt sich auch durch längeres kräftiges Reiben nicht redispergieren, sondern zerfällt in Filmstücke.

### Bestimmung des Absitzverhaltens der Pulver (Röhrenabsitz):

Zur Bestimmung des Absitzverhaltens wurden jeweils 50 g des Dispersionspulvers in 50 ml Wasser redispergiert, danach auf 0.5 % Festgehalt verdünnt und die Absitzhöhe an Feststoff von 100 ml dieser Redispersion in eine graduierte Röhre gefüllt und das Absetzen nach 1 Stunde gemessen.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung des Luftgehalts im Mörtel:

Es wurde ein DIN-Mörtel nach DIN 1164 der nachfolgenden Rezeptur mit einem Wasser-Zement-Faktor W/Z von 0.45 und einem Kunststoff-Zement-Faktor K/Z von 0.15 angerührt:

| | |
|---|---|
| Portlandzement PZ-35F | 900 g |
| Normsand | 2700 g |
| Silicon-Entschäumer S-860 (Fa. Wacker Chemie) | 7.2 g |
| Dispersionspulver | 135 g |
| Wasser | 405 g |

Der Luftgehalt wurde mittels DIN 18555 Teil 2 bestimmt.

### Bestimmung der Zementstabilität:

Es wurde eine Zementmischung der nachfolgenden Rezeptur angerührt:

| | |
|---|---|
| Portlandzement | 82.5 g |
| Calcit (CaCO₃ 10-40 mm) | 75 g |
| Quarzsand (200-500 mm) | 142 g |
| Dispersionspulver | 14.5 g |
| Wasser | 85 g |

Die Verarbeitbarkeit der Zementmischung wurde über einen Zeitraum von 2 Stunden beobachtet und qualitativ beurteilt.

Bestimmung der Haftzugfestigkeit von hydraulisch erhärtenden Dünnbettklebern (Fliesenklebern):
Es wurde eine Zementmischung nach folgender Rezeptur angerührt.

| | |
|---|---|
| Portlandzement PZ 35F | 300 g |
| Quarzsand Nr. 12 | 150 g |
| Quarzsand F 32 | 465 g |
| Tylose FL 15002 | 3 g |
| Dispersionspulver | 48.3 g |
| Wasser | 242 g |

Mit Abzugskrampen versehene Fliesen wurden in den zu prüfenden Kleber eingelegt und nach Erhärtung durch einen Zugkolben mit vorgewählter Laststeigerungstrate abgezogen. Aus der ermittelten Abreißkraft und der Fläche des Prüfstempels ergab sich die entsprechende Haftzugfestigkeit. Dabei wurden folgende Lagerungen geprüft:
A) 28 Tage Normklima (23°C/50%r.F.)
B) 7 Tage Normklima + 21 Tage Wasser (20°C)
C) 14 Tage Normklima + 14 Tage Trockenschrank (70°C) + 1 Tag Normklima
D) 7 Tage Normklima + 21 Tage Wasser (20°C) + 25 Tage Frost-Tau-Wechsel (Frostlagerung bei mind. -15°C, Wasserlagerung bei ca. 12°C)

Die Prüfergebnisse sind in Tabelle 3 und 4 zusammengefaßt.

Mit den sulfonierten Polyestern können deutlich höherprozentige Verdüsungsansätze versprüht werden, da die Viskosität der Dispersion relativ niedrig ist. Mit PVAl-haltigen Systemen gelingt dies auf Grund der hohen Viskosität nicht. Mit Stärke als Schutzkolloid erhält man zwar niederviskose Dispersionen, die Pulver sind jedoch nicht so gut redispergierbar wie erwünscht, sehr blockanfällig und außerdem nicht zementstabil. Zusammensetzungen mit den sulfonierten Polyestern hingegen liefern Pulver, die gut redispergieren, block- und zementstabil sind. Die Ergebnisse der Haftzugfestigkeitsprüfungen (Tabelle 4) zeigen eine deutliche Erhöhung der Haftzugfestigkeit durch den Zusatz der erfindungsgemäßen Dispersionspulver aus Beispiel 28 bis 34 im Vergleich zu den Vergleichsbeispielen 1 und 2.

**Tabelle 3:**

| Beispiel | Festgehalt (%) | Viskosität (mPas) | Filmredispergierbarkeit | Röhrenabsitz 1 h [cm] | Blockfestigkeit | Luftgehalt Mörtel | Zement-Stabilität |
|---|---|---|---|---|---|---|---|
| Bsp. 28 | 55.2 | 80 | Note 1 | 0.1 | 2 | 5 % | 2 h |
| Bsp. 29 | 56.2 | 160 | Note 1 | 0.1 | 2 | 4 % | 2 h |
| Bsp. 30 | 51.5 | 60 | Note 1 | 0.2 | 2 | 5 % | 2 h |
| Bsp. 31 | 55.3 | 110 | Note 1 | 0.3 | 2 | 5 % | 2 h |
| Bsp. 32 | 51.5 | 53 | Note 1 | 0.1 | 2 | 4 % | 2 h |
| Bsp. 33 | 52.9 | 48 | Note 1 | 0.2 | 2 | 5 % | 2 h |
| Bsp. 34 | 51.8 | 42 | Note 1 | 0.1 | 2 | 5 % | 2 h |
| V.bsp. 1 | 43.4 | 124 | Note 1 | 0.4 | 2 | 4 % | 2 h |
| V.bsp. 2 | 52.3 | 53 | Note 2 | 1.1 | 4 | 9 % | 15 Min |

**Tabelle 4:**

| (Haftzugfestigkeiten in N/mm² nach Lagerung A-D) : | | | | |
|---|---|---|---|---|
| Beispiel | A | B | C | D |
| Bsp. 28 | 1.45±0.08 | 0.88±0.08 | 1.33±0.15 | 0.89±0.05 |
| Bsp. 29 | 1.32±0.05 | 0.63±0.02 | 1.26±0.09 | 0.73±0.05 |
| Bsp. 30 | 1.47±0.06 | 0.73±0.05 | 1.41±0.10 | 0.82±0.06 |
| Bsp. 31 | 1.32±0.09 | 0.81±0.08 | 1.31±0.14 | 0.89±0.03 |
| Bsp. 32 | 1.19±0.08 | 0.71±0.07 | 1.00±0.12 | 0.69±0.07 |
| Bsp. 33 | 1.45±0.07 | 0.90±0.08 | 1.29±0.08 | 0.90±0.05 |
| Bsp. 34 | 1.31±0.06 | 0.79±0.09 | 1.19±0.15 | 0.85±0.05 |
| V.bsp. 1 | 1.08±0.10 | 0.60±0.06 | 0.78±0.06 | 0.56±0.05 |
| V.bsp. 2 | 1.06±0.03 | 0.47±0.06 | 0.27±0.06 | 0.61±0.02 |

## Patentansprüche

1. Schutzkolloidstabilisierte, Polymer-Zusammensetzungen, in Form deren wässrigen Polymerdispersionen oder in Wasser redispergierbaren Polymerpulver, welche mindestens ein filmbildendes Basispolymer und ein Schutzkolloid enthalten, dadurch gekennzeichnet, daß das Schutzkolloid ein sulfoniertes Kondensationsprodukt aus ungesättigten Di- oder Polycarbonsäuren und mindestens einer Verbindung aus der Gruppe umfassend Diole, Polyole, Diamine und Polyamine ist.

2. Schutzkolloidstabilisierte Polymer-Zusammensetzungen nach Anspruch 1, dadurch gekennzeichnet, daß das Schutzkolloid ein sulfoniertes Kondensationsprodukt aus ethylenisch ungesättigten, aliphatischen oder aromatischen Di- oder Polycarbonsäuren mit 4 bis 10 C-Atomen und 2 bis 4 Carbonsäurefunktionen oder davon abgeleiteten Carbonsäureanhydrid-Gruppen und einem aliphatischen, offenkettigen oder cyclischen Polyol mit 2 oder 3 OH-Gruppen ist.

3. Schutzkolloidstabilisierte Polymer Polymer-Zusammensetzungen nach Anspruch 1 oder 2, dadurch gekennzeichnet, daß der Sulfonierungsgrad 10 Mol% bis 100 Mol% und das gewichtsmittlere Molekulargewicht Mw von 500 bis 1000000 beträgt.

4. Schutzkolloidstabilisierte Polymer-Zusammensetzungen nach Anspruch 1 bis 3, dadurch gekennzeichnet, daß als sulfonierte Polyester solche erhältlich durch Polykondensation von einer oder mehreren Verbindungen aus der Gruppe umfassend Maleinsäure, Maleinsäureanhydrid, Fumarsäure oder Itaconsäure mit einer oder mehreren Verbindungen aus der Gruppe umfassend 1,2-Ethandiol, 1,2-Propandiol, 1,3-Butandiol, 1,4-Butandiol, 1,4-Cyclohexandiol oder 2,2'-Dimethylpropandiol und anschließender Hydrogensulfit-Addition, mit einem Sulfonierungsgrad von 50 Mol% bis 100 Mol%, und einem gewichtsmittleren Molekulargewicht Mw von 1000 bis 20000 enthalten sind.

5. Schutzkolloidstabilisierte Polymer-Zusammensetzungen nach Anspruch 1 bis 4, dadurch gekennzeichnet, daß als filmbildendes Basispolymer ein Polymerisat von einem oder mehreren Monomeren aus der Gruppe der Vinylester von unverzweigten oder verzweigten Carbonsäuren mit 1 bis 12 C-Atomen, der Ester der Acrylsäure und Methacrylsäure mit unverzweigten oder verzweigten Alkoholen mit 1 bis 12 C-Atomen, Vinylaromaten, Vinylhalogenide, Olefine, Diene enthalten ist.

6. Schutzkolloidstabilisierte Polymer-Zusammensetzungen nach Anspruch 1 bis 4, dadurch gekennzeichnet, daß als filmbildendes Basispolymer ein Polymerisat aus der Gruppe umfassend Vinylacetat-Polymerisate, Vinylacetat-EthylenCopolymere, Vinylester-Ethylen-Vinylchlorid-Copolymere, Vinylester-Acrylsäureester-Copolymerisate, Polymerisate von n-Butylacrylat oder 2-Ethylhexylacrylat, Copolymerisate von Methylmethacrylat mit n-Butylacrylat und/oder 2-Ethylhexylacrylat, Vinylacetat/Vinylchlorid/Ethylen-Copolymerisaten, Vinylchlorid-Ethylen-Copolymere, Vinylchlorid/Acrylat-Copolymere, Styrol-Butadien-Copolymere, Styrol-Acrylsäureester-Copolymere enthalten ist.

7. Verfahren zur Herstellung der Schutzkolloid-stabilisierten Polymer-Zusammensetzungen nach Anspruch 1 bis 6, durch Polymerisation des Basispolymeren nach dem Emulsions- oder Suspensionspolymerisationsverfahren und gegebenenfalls anschließender Trocknung der wässrigen Dispersion, wobei die sulfonierten Polyester bzw. Polyamide ganz oder teilweise bereits vor oder während der Polymerisation zugegeben werden oder nach der Polymerisation bzw. vor der Trocknung der damit erhältlichen wässrigen Dispersion zugegeben werden oder nach der Trocknung der wässrigen Dispersion dem pulverförmigen Basispolymeren zugegeben werden.

8. Verwendung der schutzkolloidstabilisierten Polymer-Zusammensetzungen nach Anspruch 1 bis 6 als Rezepturbestandteil in Verbindung mit hydraulisch abbindenden Bindemitteln in Bauklebern, Putzen, Spachtelmassen, Fußbodenspachtelmassen, Dichtschlämmen, Fugenmörtel und Farben.

9. Verwendung der schutzkolloidstabilisierten Polymer-Zusammensetzungen nach Anspruch 1 bis 6 als Alleinbindemittel für Beschichtungsmittel und Klebemittel.

10. Verwendung der schutzkolloidstabilisierten Polymer-Zusammensetzungen nach Anspruch 1 bis 6 als Beschichtungs- bzw. Bindemittel für Textilien und Papier.

## Claims

1. Protective-colloid-stabilized polymer compositions in the form of their aqueous polymer dispersions or water-redispersible polymer powders, which comprise at least one film-forming base polymer and a protective colloid, characterized in that the protective colloid is a sulphonated condensation product made from unsaturated di- or polycarboxylic acids and from at least one compound selected from the class encompassing diols, polyols, diamines and polyamines.

2. Protective-colloid-stabilized polymer compositions according to Claim 1, characterized in that the protective colloid is a sulphonated condensation product made from ethylenically unsaturated, aliphatic or aromatic di- or polycarboxylic acids having from 4 to 10 carbon atoms and from 2 to 4 carboxylic acid functions, or from carboxylic anhydride groups derived therefrom, with a cyclic or open-chain aliphatic polyol having 2 or 3 OH groups.

3. Protective-colloid-stabilized polymer compositions according to Claim 1 or 2, characterized in that the degree of sulphonation is from 10 to 100 mol% and the weight-average molecular weight Mw is from 500 to 1,000,000.

4. Protective-colloid-stabilized polymer compositions according to Claims 1 to 3, characterized in that sulphonated polyesters are present which are obtainable by polycondensing one or more compounds selected from the class encompassing maleic acid, maleic anhydride and fumaric acid or itaconic acid with one or more compounds selected from the class encompassing 1,2-ethanediol, 1,2-propanediol, 1,3-butanediol, 1,4-butanediol and 1,4-cyclohexanediol or 2,2'-dimethylpropanediol, followed by hydrogensulphite addition, with a degree of sulphonation of from 50 to 100 mol%, and with a weight-average molecular weight Mw of from 1000 to 20,000.

5. Protective-colloid-stabilized polymer compositions according to claims 1 to 4, characterized in that a film-forming base polymer is present which is a polymer of one or more monomers selected from the class consisting of the vinyl esters of unbranched or branched carboxylic acids having from 1 to 12 carbon atoms, the esters of acrylic acid and methacrylic acid with unbranched or branched alcohols having from 1 to 12 carbon atoms, vinyl aromatics, vinyl halides, olefins and dienes.

6. Protective-colloid-stabilized polymer compositions according to claims 1 to 4, characterized in that a film-forming base polymer is present which is a polymer selected from the class encompassing vinyl acetate polymers, vinyl acetate-ethylene copolymers, vinyl ester-ethylene-vinyl chloride copolymers, vinyl ester-acrylate copolymers, polymers of n-butyl acrylate or 2-ethylhexyl acrylate, copolymers of methyl methacrylate with n-butyl acrylate and/or 2-ethylhexyl acrylate, vinyl acetate-vinyl chloride-ethylene copolymers, vinyl chloride-ethylene copolymers, vinyl chloride-acrylate copolymers, styrene-butadiene copolymers and styrene-acrylate copolymers.

7. Process for preparing the protective-colloid-stabilized polymer compositions according to Claims 1 to 6, by polymerizing the base polymer by emulsion or suspension polymerization followed, if desired, by drying of the aqueous dispersion, where some or all of the sulphonated polyesters and/or polyamides are added to the pulverulent base polymer prior to or during the polymerization or after the polymerization and/or prior to the drying of the aqueous dispersion obtainable in this way, or after the drying of the aqueous dispersion.

8. Use of the protective-colloid-stabilized polymer compositions according to Claims 1 to 6 as a constituent in a formulation in combination with hydraulically setting binders in construction adhesives, plasters and renderings, trowelling compositions, floor-filling compositions, sealing slurries, jointing mortars and paints.

9. Use of the protective-colloid-stabilized polymer compositions according to Claims 1 to 6, as sole binders for coating compositions and adhesives.

10. Use of the protective-colloid-stabilized polymer compositions according to Claims 1 to 6 as coating compositions or binders for textiles or paper.

## Revendications

1. Compositions polymères stabilisées par des colloïdes protecteurs, sous forme de leurs dispersions polymères aqueuses ou de poudres polymères redispersables dans l'eau, contenant au moins un polymère de base filmogène et un colloïde protecteur, caractérisées en ce que le colloïde protecteur est un produit de condensation sulfoné à base d'acides dicarboxyliques ou polycarboxyliques insaturés et d'au moins un composé parmi le groupe constitué de diols, de polyols, de diamines et de polyamines.

2. Compositions polymères stabilisées par des colloïdes protecteurs selon la revendication 1, caractérisées en ce que le colloïde protecteur est un produit de condensation sulfoné à base d'acides dicarboxyliques ou polycarboxyliques éthyléniquement insaturés, aliphatiques ou aromatiques, ayant de 4 à 10 atomes de carbone et de 2 à 4 fonctions acide carboxylique ou groupes anhydride carboxylique qui en sont dérivés, et d'un polyol aliphatique, à chaîne ouverte ou cyclique, ayant 2 ou 3 groupes OH.

3. Compositions polymères stabilisées par des colloïdes protecteurs selon la revendication 1 ou 2, caractérisées en ce que le degré de sulfonation est de 10% en moles à 100% en moles et le poids moléculaire moyen en poids Mw est de 500 à 1 000 000.

4. Compositions polymères stabilisées par des colloïdes protecteurs selon les revendications 1 à 3, caractérisées en ce que les polyesters sulfonés présents sont ceux pouvant être obtenus par polycondensation d'un ou de plusieurs composés parmi le groupe constitué de l'acide maléique, de l'anhydride maléique, de l'acide fumarique ou de l'acide itaconique, avec un ou plusieurs composés parmi le groupe constitué du 1,2-éthanediol, du 1,2-propanediol, du 1,3-butanediol, du 1,4-butanediol, du 1,4-cyclohexanediol ou du 2,2'-diméthylpropanediol, suivie d'une addition d'hydrogénosulfite, avec un degré de sulfonation de 50% en moles à 100% en moles, et un poids moléculaire moyen en poids Mw de 1000 à 20 000.

5. Compositions polymères stabilisées par des colloïdes protecteurs selon les revendications 1 à 4, caractérisées en ce que le polymère de base filmogène présent est un polymère d'un ou de plusieurs monomères parmi le groupe constitué d'esters vinyliques d'acides carboxyliques non ramifiés ou ramifiés, ayant de 1 à 12 atomes de carbone, d'esters de l'acide acrylique ou de l'acide méthacrylique avec des alcools non ramifiés ou ramifiés, ayant de 1 à 12 atomes de carbone, de composés vinylaromatiques, d'halogénures de vinyle, d'oléfines et de diènes.

6. Compositions polymères stabilisées par des colloïdes protecteurs selon les revendications 1 à 4, caractérisées en ce que le polymère de base filmogène présent est un polymère parmi le groupe constitué de polymères d'acétate de vinyle, de copolymères d'acétate de vinyle/éthylène, de copolymères d'ester vinylique/éthylène/chlorure de vinyle, de copolymères d'ester vinylique/ester acrylique, de polymères d'acrylate de n-butyle ou d' acrylate de 2-éthylhexyle, de copolymères de méthacrylate de méthyle avec de l'acrylate de n-butyle et/ou de l'acrylate de 2-éthylhexyle, de copolymères d'acétate de vinyle/chlorure de vinyle/éthylène, de copolymères de chlorure de vinyle/éthylène, de copolymères de chlorure de vinyle/acrylate, de copolymères de styrène/butadiène et de copolymères de styrène/ester acrylique.

7. Procédé de préparation des compositions polymères stabilisées par des colloïdes protecteurs selon les revendications 1 à 6, par polymérisation du polymère de base après le procédé de polymérisation en émulsion ou en suspension et éventuellement séchage ultérieur de la dispersion aqueuse, une partie ou la totalité des polyesters ou polyamides sulfonés étant ajoutée au polymère de base pulvérulent, déjà avant ou durant la polymérisation, ou étant ajoutée après la polymérisation ou avant le séchage de la dispersion aqueuse pouvant être ainsi obtenue, ou étant ajoutée après le séchage de la dispersion aqueuse.

8. Utilisation des compositions polymères stabilisées par des colloïdes protecteurs selon les revendications 1 à 6, en tant que constituant de formulation en association avec des liants durcissant par voie hydraulique dans des adhésifs de construction, des enduits crépis, des mastics bouche-pores, des mastics pour planchers, des boues d'étanchéité, des mortiers à joints et des peintures.

9. Utilisation des compositions polymères stabilisées par des colloïdes protecteurs selon les revendications 1 à 6, en tant que liants uniques pour des compositions de revêtements et des adhésifs.

10. Utilisation des compositions polymères stabilisées par des colloïdes protecteurs selon les revendications 1 à 6, en tant que compositions de revêtements ou liants pour textiles et papier.
